# EUROPÄISCHE PATENTANMELDUNG

(11) **EP 0 822 367 A1**
(43) Veröffentlichungstag der Anmeldung: **04.02.1998**
(21) Anmeldenummer: 97112409.4
(22) Anmeldetag: 19.07.1997
(51) Int. Cl.: F16M 11/04

(54) **Aufhängevorrichtung für Steuergehäuse, Steuertafeln und dgl.**

(30) Priorität: 29.07.1996 DE 19630541
(71) Anmelder: Metallwaren Heidersdorf GmbH, 09526 Heidersdorf (DE)
(72) Erfinder: Schneider, Wolfgang, 31675 Bückeburg (DE); Glä er, Wolf-Achim, 09526 Olbernhau (DE)

(57) **Zusammenfassung**

Bei den bekannten Aufhängevorrichtungen mit Bewegungs- und Verbindungsgliedern (2) ist die Montage aufwendig, und die Tragarmprofile müssen auf Grund der festigkeitsmäßigen Anforderungen recht kompliziert gestaltet werden. Darüber hinaus sind Faltenbälge, Schrauben, Kanten und Spalten Stellen für Schmutzablagerungen, die nicht durch einfaches Säubern (z.B. abspritzen), beseitigt werden können. Die neue Lösung ermöglicht eine schnelle und bequeme Montage mit einfachen Tragarmprofilen durch ein einziges Element, der sogenannten Spannstrebe (23). Die Aufhängevorrichtung ist wasserdicht. Sie besitzt keine vorstehenden Schrauben, Kanten oder Spalte.
Sie ist einsetzbar im aggressiven, aseptischen und hygienischen Bereich und kann mit entsprechenden Reinigungs- und Desinfektionsmitteln bei Drücken bis zu 180 bar gesäubert werden.

## Beschreibung

Die Erfindung betrifft eine Aufhängevorrichtung für Steuergehäuse, Steuertafeln und dgl. entsprechend dem Oberbegriff des Anspruchs 1.

Derartige Aufhängevorrichtungen für Steuergehäuse, Steuertafeln und dgl., wie sie z.B. aus der DE 3805 425 C1 bekannt sind, bestehen aus einem oder mehreren Tragarmen und den Bewegungs- und Verbindungsgliedern. Die Bewegungs- und Verbindungsglieder sind Dreh- und Kupplungsgelenke, Winkel, Neigungsadapter, Zwischengelenke, Kupplungen u.ä.

Mit den an den Tragarmen montierten Bewegungs- und Verbindungsgliedern wird eine universelle Schwenkbarkeit des am Ende der Aufhängevorrichtung angebrachten Steuergehäuses und dgl. erreicht. Die Befestigung der Aufhängevorrichtung erfolgt auf der einen Seite an der Maschine, Anlage oder an der Gebäudewand mittels Flansch oder Gelenk. Mit diesen kompletten Aufhängevorrichtungen ist es für den Bediener der Maschine oder Anlage möglich, die im Steuergehäuse untergebrachte Bedien- und Steuereinheit mit der Tastatur, dem Bildschirm oder dem kompletten PC in eine solche Position zu bringen, daß er bequem, d.h. gut sichtbar, zugänglich und fehlerfrei bedienen bzw. die Daten ablesen kann. Die Aufhängevorrichtung mit ihren Tragarmen und den Bewegungs- und Verbindungsgliedern müssen das Gewicht des Steuergehäuses mit den Einbauten sowie die aufgebrachte Kraft der Bedienperson beim Verschwenken des Steuergehäuses aufnehmen. Sie dürfen sich nicht infolge der recht hohen Belastung verwinden oder durchbiegen, da sonst Probleme bezüglich der genauen Positionierung des Bedientableaus entstehen können.

Um eine ausreichende Biege- und Verwindungssteifigkeit der Profile für die Tragarme zu erreichen, besitzen die Querschnitte zwei Kammern (DE 4116 464 C2), eine untere Kammer zur Erhöhung der Festigkeit des Tragarmes und eine obere Kammer in der die Kabel geführt werden. Die Zweikammerprofile haben den Nachteil, daß sie ein ungünstiges Verhältnis zwischen Kabelaufnahmevermögen und dem beanspruchten Raum für den Tragarm besitzen. Weiterhin sind solche Profile äußerst kostenintensiv. Darüber hinaus ergeben sich bei derart dimensionierten Profilen ästhetische Probleme. Auch die ovalförmigen Profile für die Tragarme mit den angeformten Schraubkanälen für die Befestigung der Bewegungs- und Verbindungsglieder haben den Nachteil, daß nur mit einer relativ großen Dimensionierung des Querschnittes die erforderliche Biegefestigkeit der Tragarme erreicht wird. Auch der Anschluß von Verbindungs- und Bewegungsgliedern an den ovalen Querschnitt des Trägerarmprofils erfordert in der Herstellung der Verbindungs- und Bewegungsglieder einen höheren Aufwand.

In der Praxis hat sich die stirnseitige Schraubbefestigung der Bewegungs- und Verbindungsglieder mittels den nach innen abstehenden in Profilrichtung verlaufenden und an das Tragarmprofil angeformten Schraubkanälen nicht bewährt (DE 4331 124 C2; DE 4331 125 C2; DE 4116 464 C2). Die gesamte Montage mit ca. 8 Schrauben je Bewegungs- und Verbindungsglied ist sehr aufwendig, vor allem wenn eine Konfektionierung der Tragarme kundenspezifisch vor Ort erfolgen muß.

Auch die Befestigung der Bewegungs- und Verbindungsglieder an die Tragarmprofile mittels Schneidringschrauben, Sechskant- oder Senkschrauben ist sehr aufwendig. Diese Schrauben sind auch Stellen für Schmutzablagerungen u.ä. Mit den bekannten Lösungen ist ein definierter Druck auf die zwischen Tragarm und dem Bewegungs- und Verbindungsglied liegende Dichtung nur mit hohem Aufwand möglich, da der Dichtungsdruck nur durch ein Einrichten des Tragarmes nach Gefühl erzeugt wird. Dazu sind zwei Arbeitskräfte erforderlich. Die Bewegungsglieder, wie Gelenke, sind entscheidend für die optimale Verschwenkbarkeit der Steuergehäuse mit dem PC oder ähnlichem verantwortlich. Diese Gelenke werden gegen Eindringen von Staub und Feuchtigkeit auch an den Stoßstellen von Gelenk und Tragarmprofil mit Faltenbälgen umbaut (DE 9212 763 U1; DE 3805 422 C1). Diese Faltenbalge haben den Nachteil, daß sie auf Grund ihrer Falten und Kanten keine gründliche Reinigung besonders unter dem hygienischen und bakteriologischen Aspekt gestatten.

Bei sämtlichen bekannten Aufhängevorrichtungen mit Bewegungs- und Verbindungsgliedern sind sichtbare Dichtungen, Schrauben, Ecken, Kanten, und Spalte vorhanden, die eine Ablagerung von Schmutz und Rückständen aus dem Verarbeitungsprozeß der Maschine oder Anlage ohne weiteres ermöglichen. Das führt in kurzer Zeit besonders in der Lebensmittelindustrie, in der Medizintechnik und ähnlichen Bereichen dazu, daß sich Brutstätten für Mikroorganismen und auch pathologische Keime bilden können. Die Reinigung und Desinfektion derartiger Aufhängevorrichtungen ist wirtschaftlich nicht möglich, da die Verbindungsstellen zwischen Tragarmen und den Bewegungs- und Verbindungsgliedern nicht gegen Strahlwasser mit Desinfektionsmittel ausgelegt sind. Der Einsatz dieser Aufhängevorrichtung im aggressiven, aseptischen und hygienischen Bereich ist auf Grund der oben beschriebenen Nachteile ausgeschlossen.

Es sind auch Aufhängevorrichtungen bekannt, deren Tragarme und Steuergehäuse aus Edelstahl hergestellt sind. Diese Aufhängevorrichtungen sind auch so ausgeführt, daß kein Staub und Strahlwasser aus beliebiger Richtung eindringen kann. Diese Aufhängevorrichtungen sind aber in ihrer Verstellmöglichkeit des Steuergehäuses stark eingeschränkt, da die Tragarme nur aus s-, l-, oder j-förmigen gebogenen Rohren bestehen. Da die Tragarme nur einen rohrförmigen Querschnitt besitzen, ist die Ausladung der Aufhängevorrichtungen und die Traglast sehr eingeschränkt. Ein weiterer Nachteil ist, daß die Tragarme jeweils kundenspezifisch angefertigt, d.h. gebogen werden müssen. Eine Anpassung der Aufhängevorrichtung vor Ort ist ausgeschlossen. Darüber hinaus werden die Tragarme, um die erforderliche Dichtheit zu erreichen mit den Kupplungen verschweißt. Aus der US-Patentschrift 4,736,922 ist eine Spannschraube bekannt. Diese Spannschraube führt nicht durch das gesamte technische Gebilde und befestigt nur einen kleinen Teil an Bauelementen.

Der im Anspruch 1 angegebenen Erfindung liegt die Aufgabe zugrunde, die Tragarme mit einfacher Querschnittsgeometrie so zu entwickeln, daß eine hohe Biege- und Verwindungssteifigkeit der Tragarme auch bei größerer Ausladung der Aufhängevorrichtung erreicht wird und eine einfache, bequeme und kostengünstige Montage der Tragarme mit den Bewegungs- und Verbindungsgliedern und zwar auch kundenspezifisch vor Ort möglich ist, keine sichtbaren Dichtungen, Ecken, Kanten, Abdeckungen, Schrauben und Spalte sich ergeben und daß keine Schweißverbindungen zwischen Kupplungen u.ä. erforderlich sind. Weiterhin müssen die Tragarme mit den montierten Bewegungs- und Verbindungsgliedern den vollständigen Schutz gegen Eindringen von Staub und Dämpfen, gegen schädliche Wirkung von Wasser, Reinigungs- und Desinfektionsmittel unter konstanten Druck- und Zeitbedingungen erfüllen. Die Lösung dieser Aufgabe erfolgt durch die Merkmale des Anspruchs 1.

Die mit der Erfindung erzielbaren Vorteile bestehen insbesondere darin, daß mit einfachen Tragarmprofilen eine hohe Biege- und Verwindungssteifigkeit der Tragarme erreicht wird, die Montage der Aufhängevorrichtung einfach und kostengünstig erfolgt, das Innere der Aufhängevorrichtung gegen Staub, Eindringen von Wasser, Reinigungs- und Desinfektionsmittel geschützt ist auch bei Anwendungen von hohen Drücken und Temperaturen. Kanten, Spalte, äußere Schrauben, sichtbare Dichtungen oder Faltenbälge u.ä. sind bei dieser Erfindung nicht vorhanden, die die Ablagerung von Schmutz und sonstigen Rückständen begünstigen. Demgemäß ist vorgesehen, daß durch den Tragarm eine mit Vorspannung beauflagte Spannstrebe geführt wird. Die Vorspannung der Spannstrebe wird durch die an den Enden der Spannstrebe vorgesehenen Befestigungsmittel, wie Gewinde oder Schrauben u.ä. erzeugt. Die Befestigungsmittel stehen in Verbindung mit den Bewegungs- und Verbindungsgliedern, d.h. z.B. auf der einen Seite wird das Gewinde der Spannstrebe in ein im Bewegungs- oder Verbindungsglied vorgesehenes Gewindeloch geschraubt, und auf der anderen Seite der Spannstrebe erfolgt deren Befestigung mit dem Bewegungs- oder Verbindungsglied mit Gewinde und Mutter. Durch das Anziehen der Mutter wird die Vorspannung in der Spannstrebe erzeugt. Wird nun die Spannstrebe außerhalb der Mitte des Tragarmquerschnittes, d.h. mit einem minimalen Abstand zur Innenseite des Tragarmes und entgegen der Kraftrichtung angeordnet, so wirkt die Vorspannung der Spannstrebe entgegen der Belastung aus der Masse des Steuergehäuses z.B. des PC und der von der Bedienperson aufgebrachten Kraft auf das Steuergehäuse. Somit ist es möglich, mit einfachen und dünnwandigen Tragarmprofilen eine hohe Biege- und Verwindungssteifigkeit der Tragarme zu erreichen. Weiterhin können mit der Spannstrebe die Bewegungs- und Verbindungsglieder auf einfache Art und Weise an den Tragarmen befestigt werden. In bestimmten Abständen sind die Spannstreben mit Klemmelementen in die Tragrohre gegen entstehende Vibration gesichert. An der Stirnseite der Bewegungs- und Verbindungsglieder ist eine Nut zur Aufnahme der Dichtung und eine Schulter mit Stutzen angeordnet. Bei Aufbringen der Zugspannung in der Spannstrebe entsteht ein fester Verbund zwischen dem Bewegungs- und Verbindungsglied und dem Tragarm. Weiterhin wird durch den Anschlag des Tragarmes an die Schulter der Bewegungs- und Verbindungsglieder ohne Aufwand ein definierter Dichtungsdruck erreicht, so daß eine absolute Dichtheit zwischen Tragarm und dem Befestigungs- oder Verbindungsglied entsteht. Diese Dichtheit ermöglicht, daß z.B. bei Einsatz der Aufhängevorrichtung mit den Tragarmen in der Lebensmittelindustrie, Sanitärtechnik, Medizin (z.B. Krankenhäuser), Pharmaindustrie, Wassertechnik u.ä. eine Reinigung, Desinfektion und Sterilisation der Aufhängevorrichtung mit Drücken bis zu 180 bar, mit entsprechender Temperatur bis zu 140°C und darüber und mit entsprechenden Reinigungs- und Desinfektionsmittel (Tenside, Alkohol, Chlorwasserstoffe, Natriumhypochlorit, Säurekomponenten usw.) erfolgen kann. Durch das Verspannen der Bewegungs- und Verbindungsglieder mit den Tragarmen mittels Spannstreben im Inneren der Tragarme ermöglicht, daß außen keinerlei Schrauben, Nuten, Kanten u.ä. notwendig sind.

Weitere vorteilhafte Ausgestaltungen des Gegenstandes nach Anspruch 1 ergeben sich aus den Unteransprüchen.

Ein Ausführungsbeispiel der Erfindung ist in den Zeichnungen dargestellt und wird im folgenden näher beschrieben.

Es zeigen:
- Figur 1:: eine Prinzipskizze einer Variante der Aufhängevorrichtung im Schnitt
- Figur 2:: einen Querschnitt im Bereich des Tragarmes und des Bewegungs- und Verbindungsgliedes mit Gewindeloch
- Figur 3:: einen Querschnitt im Bereich des Tragarmes und des Bewegungs- und Verbindungsgliedes mit Nut
- Figur 4:: einen Querschnitt durch ein Tragarmprofil mit Auswölbung
- Figur 5:: einen Schnitt durch eine Variante des Bewegungs- und Verbindungsgliedes mit Führungsbuchse und Nut
- Figur 6:: einen Schnitt durch eine Variante des Bewegungs- und Verbindungsgliedes mit Führungsbuchse mit Gewindeloch
- Figur 7:: eine Ansicht der Nut zur Aufnahme der Spannstrebe mit Montagehilfe
- Figur 8:: einen Schnitt im Bereich Tragarm und Bewegungs- und Verbindungsglied mit einer Schräge
- Figur 9:: Querschnitt mit Darstellung einer Variante des Klemmelementes
- Figur 10:: Querschnitt mit Darstellung einer weiteren Variante des Klemmelementes

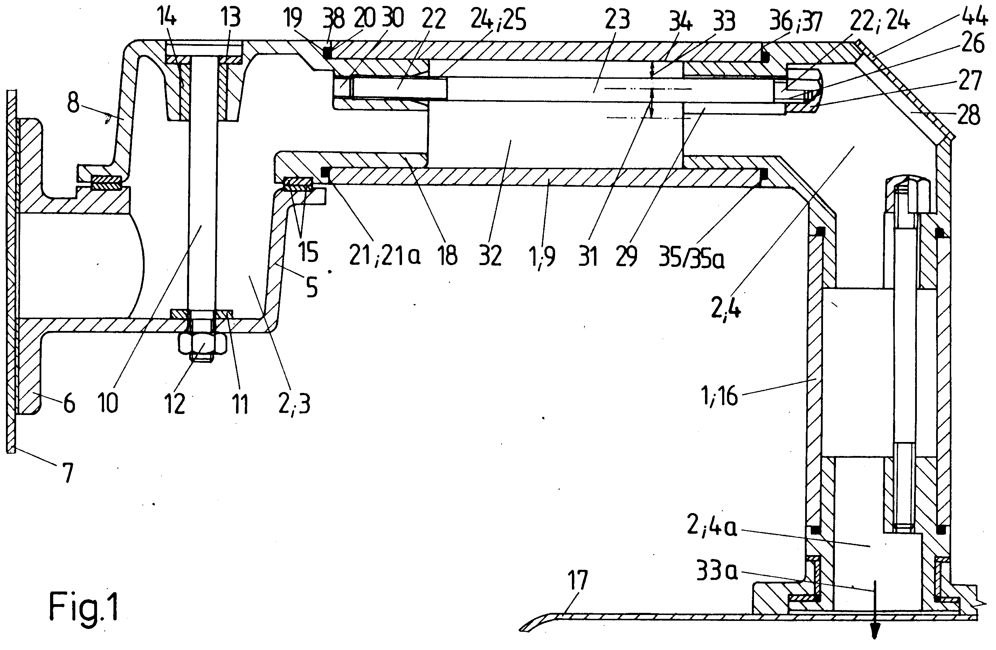

In der Figur 1 ist eine Aufhängevorrichtung bestehend aus Tragarmen 1, 16 und den Bewegungs- und Verbindungsgliedern 3, 4, 4a dargestellt. In dem Ausführungsbeispiel sind als Bewegungs- und Verbindungsglieder 3, 4, 4a ein Wandgelenk 3, ein Winkel 4 und ein Aufsatzflansch 4a verwendet. Das Wandgelenk 3 besteht aus einem Unterteil 5 mit dem Flansch 6 zur Befestigung des Wandgelenkes 3 an einer Anlage, Maschinenkörper oder Gebäudewand 7 und dem Oberteil 8 mit dem ersten Tragarm 1. Das Oberteil 8 und das Unterteil 5 wird mittels Achse 10, Scheibe 11 und Mutter 12 zusammengespannt und mit einem Radiallager 13 und einem Axiallager 14 gelagert. Ein entsprechendes Lagerspiel sorgt für eine gute Drehbeweglichkeit des Wandgelenkes 3. Mit einer Gleitringdichtung 15 wird das Wandgelenk 3 abgedichtet, so daß kein Staub, Wasser u.ä. in das Innere des Wandgelenkes 3 eindringen kann. An dem ersten Tragarm 1 schließt sich ein Winkel 4 mit einem zweiten vertikalen Tragarm 16 an. Am Ende des zweiten vertikalen Tragarmes 16 ist ein drehbeweglicher Aufsatzflansch 4a befestigt. Mit Schrauben ist ein Steuergehäuse 17 mit dem drehbaren Aufsatzflansch 4a verbunden. Das Steuergehäuse 17 z.B. mit dem PC kann durch den Aufsatzflansch 4a um die Senkrechte gedreht und durch das Wandgelenk 3 in der Horizontalen in einen bestimmten Winkelbereich geschwenkt werden. Die Aufhängevorrichtung nach Figur 1 stellt nur ein Ausführungsbeispiel dar. Die Tragarme 1, 16 können unterschiedliche Längen und Tragarmprofile besitzen und mit unterschiedlichen Bewegungs- und Verbindungsgliedern, wie z.B. Zwischengelenke, Wandkupplungen usw. je nach Anwendungsfall kombiniert werden. Aufbau und Montage der gesamten Aufhängevorrichtung ist denkbar einfach. Nachfolgend erfolgt dazu anhand des Ausführungsbeispieles die Erläuterung:

Der Tragarm 1 wird über den Stutzen 18 des Oberteiles 8 geschoben, wobei in einer Nut 19 am Stutzen 18 ein Dichtring 20 eingelegt ist. Der Dichtring 20 steht um einen bestimmten Betrag über das Ende 21 bzw. der Schulter 21a der Nut 19 hervor. Als Dichtung kann auch eine entsprechende Dichtmasse verwendet werden. An den Enden 22 der Spannstrebe 23 sind Befestigungsmittel 25, 26 vorgesehen. In dem Ausführungsbeispiel wurde als Befestigungsmittel auf der einen Seite ein Gewinde 25 und auf der anderen Seite ein Gewinde 26 mit aufgedrehter Hutmutter 27 gewählt. Als Befestigungsmittel 24 können auch Klemmverbindungen oder Verbindungen mit Schrauben eingesetzt werden. Die mit der Hutmutter 27 vormontierte Spannstrebe 23 wird durch eine Öffnung 28 des Winkels 4 in den Tragarm 1 geschoben. Dabei wird auf der einen Seite die Spannstrebe 23 in einer Nut 29 des Winkels 4 geführt und auf der anderen Seite wird die Spannstrebe 23 mit dem Gewinde 25 in ein Gewindeloch 30 des Oberteiles 8 geschraubt. Mit einem Momentenschlüssel, der an der Hutmutter 27 aufgesetzt wird, kann eine definierte Vorspannung in der Spannstrebe 23 erzeugt werden. Die Öffnung 28 wird durch einen Deckel 44 dicht verschlossen. Bei einer Anordnung der Spannstrebe 23 außerhalb der Mitte 31 des Tragarmquerschnittes, d.h. mit einem minimalen Abstand 33 zur Wand des Tragarmprofiles und entgegen der Kraftrichtung 33a aus der Belastung des Steuergehäuses 17, wird eine zusätzliche Biege- und Verwindungssteifigkeit der Tragarme 1, 16 erreicht.

Somit ist es möglich, dünnwandige Tragarmprofile einzusetzen. Die Spannstrebe 23 erfüllt somit zwei Funktionen, einmal die Möglichkeit einer einfachen Montage und zum anderen die Erhöhung der Festigkeit der Tragarme 1, 16. Die Stirnseite 35 des Tragarmes 1 liegt am Ende 21 der Nut 19 bzw. der Stirnseite 35a des Bewegungs- und Verbindungsgliedes 3, 4, 4a an, so daß ein definierter Dichtungsdruck vorhanden ist. An den Stoßstellen 36 von Tragarm 1 und den Bewegungs- und Verbindungsgliedern 3, 4, 4a entsteht kein Spalt. Tragarm 1 und die Bewegungs- und Verbindungsglieder 3, 4, 4a schließen bündig ab. Die Montage des zweiten vertikal verlaufenden Tragarmes 16 mit dem Winkel 4 und dem Aufsatzflansch 4a und Spannstrebe 23 erfolgt in der gleichen Art und Weise wie beim ersten Tragarm 1.

Die Kabel und Leitungen z.B. von der Maschine zum Steuergehäuse 17 mit dem PC werden in der Reihenfolge der einzelnen Montageabschnitte durch die Aufhängevorrichtung geführt.

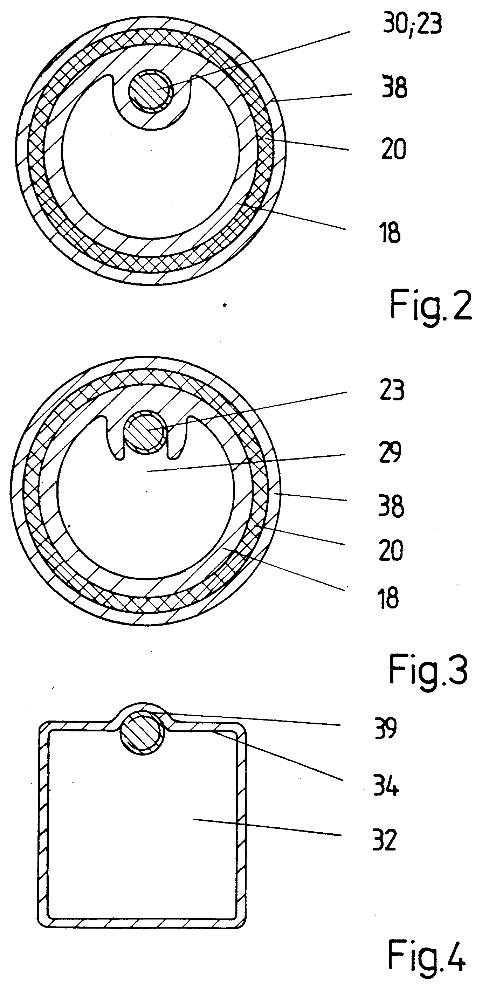

Die Figur 2 und 3 zeigt einen Querschnitt durch einen Nutansatz 38, der Dichtung 20, den Stutzen 18 und das Gewindeloch 30 mit der Spannstrebe 23 bzw. der Nut 29 mit der Spannstrebe 23.

Die Figur 4 zeigt einen Tragarmquerschnitt mit einer Auswölbung 39 zur Aufnahme und Führung der Spannstrebe 23. Diese Ausbildung des Tragarmprofils hat festigkeitsmäßige Vorteile, da die Spannstrebe 23 im Bereich der Wand 34 des Tragarmprofiles angeordnet ist.

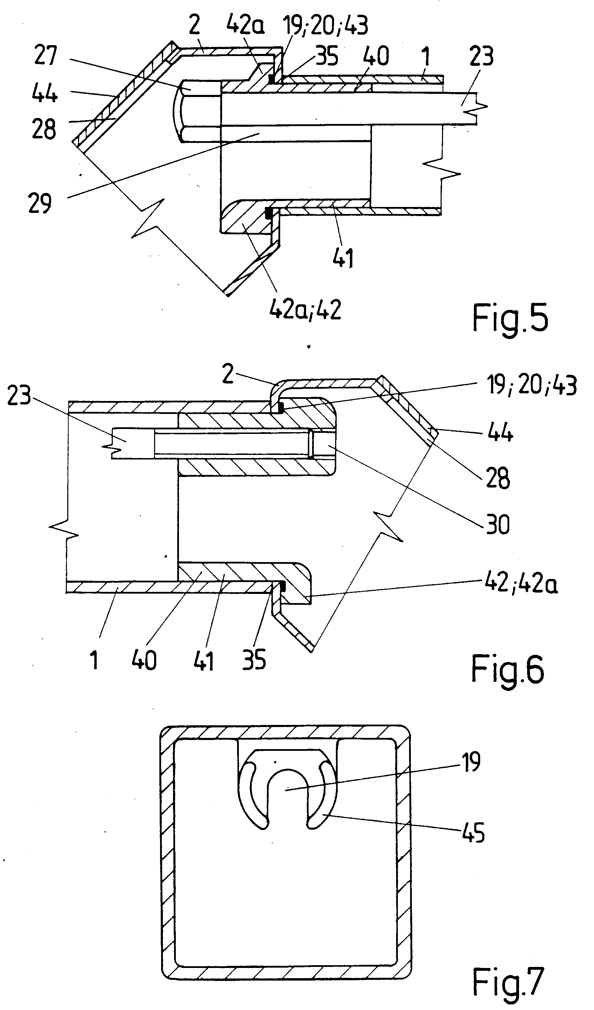

Die Figur 5 und Figur 6 zeigen eine Variante der Bewegungs- und Verbindungsglieder 3, 4, 4a mit einer Führungsbuchse 40. In der Führungsbuchse 40 ist entweder die Nut 29 zur Aufnahme der Spannstrebe 23 mit Hutmutter 27 (Figur 5) oder ein Gewindeloch 30 zum Eindrehen der Spannstrebe 23 (Figur 6) angeordnet. Das Prinzip der Montage ist analog Figur 1. Die Führungsbuchse 40 mit Nut 19 und Dichtring 20 wird mit einem Stutzen 41 in den Tragarm 1 geschoben. Zwischen einem Nutansatz bzw. Bund 42 und der Stirnseite 35 des Tragarmes 1 liegt das Bewegungs- und Verbindungsglied 3, 4, 4a. Durch das Anziehen der Spannstrebe 23 entsteht ein fester Bund zwischen Bewegungs- und Verbindungsglied 3, 4, 4a, der Führungsbuchse 40 und dem Tragarm 1. Die Abdichtung erfolgt durch eine in die Nut 19 eingelegte Dichtung 20. Die Öffnung 28 in dem Bewegungs- und Verbindungsglied 3, 4, 4a ermöglicht die Montage der Führungsbuchse 40 und der Spannstrebe 23 und dient als Hilfe beim Durchziehen der Kabel und Leitungen durch das Bewegungs- und Verbindungsglied 3, 4, 4a. Die Öffnung 28 wird durch einen Deckel 44 dicht verschlossen.

In der Figur 7 ist eine Montagehilfe für die Spannstrebe 23 in Form einer Erhebung 45 im Bereich der Hutmutter 27 dargestellt. Die Erhebung 45 um die Hutmutter 27 verhindert, daß beim Anziehen der Hutmutter 27 diese mit der Spannstrebe 23 aus der Nut 29 herausläuft. Die Erhebung 45 besitzt eine Höhe von 2 bis 4 mm.

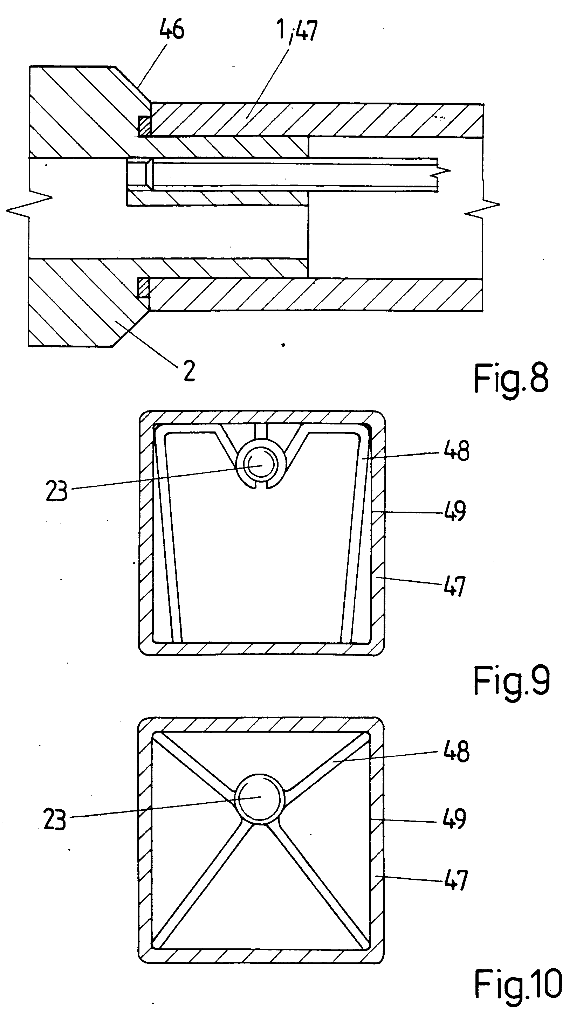

In der Figur 8 ist eine Variante der Gestaltung des Überganges vom Tragarm 1, 16 zu den Bewegungs- und Verbindungsgliedern 3, 4, 4a in Form einer Schräge 46 dargestellt. Die Schräge 46 besitzt den Vorteil, daß Toleranzen zwischen dem Profil des Tragarmes 1, 16 und den Bewegungs- und Verbindungsgliedern 3, 4, 4a besser ausgeglichen werden können.

In der Figur 9 und Figur 10 sind Klemmelemente 48 für die Spannstrebe 23 in 2 Varianten dargestellt. Diese Klemmelemente 48 besitzen Formschluß zwischen der Innenwand 49 des Profils des Tragarmes 1, 16 und der Spannstrebe 23. Mit diesen Klemmelementen 48 werden etwaige Vibrationen der Spannstrebe 23 bei dynamischer Krafteinwirkung auf die Aufhängevorrichtung vermieden.

### Aufstellung der verwendeten Bezugszeichen

- 1: Tragarm
- 3: Wandgelenk
- 4: Winkel
- 4a: Aufsatzflansch
- 5: Unterteil
- 6: Flansch
- 7: Gebäudewand
- 8: Oberteil
- 10: Achse
- 11: Scheibe
- 12: Mutter
- 13: Radiallager
- 14: Axiallager
- 15: Gleitringdichtung
- 16: Tragarm
- 17: Steuergehäuse
- 18: Stutzen
- 19: Nut
- 20: Dichtring
- 21: Ende
- 21a: Schulter
- 22: Enden
- 23: Spannstrebe
- 25: Gewinde
- 26: Gewinde
- 27: Hutmutter
- 28: Öffnung
- 29: Nut
- 30: Gewindeloch
- 31: Mitte
- 33: Abstand
- 33a: Kraftrichtung
- 34: Wand
- 35: Stirnseite
- 35a: Stirnseite
- 36: Stoßstelle
- 38: Nutansatz
- 39: Auswölbung
- 40: Führungsbuchse
- 41: Stutzen
- 42: Nutansatz, Bund
- 44: Deckel
- 45: Erhebung
- 46: Schräge
- 48: Klemmelemente
- 49: Innenwand

## Patentansprüche

1. Aufhängevorrichtung für Steuergehäuse (17), Steuertafeln und dgl. bestehend aus einem oder mehreren Tragarmen (1, 16) und an den Tragarmen (1, 16) an- oder zwischengesetzten Bewegungs- und Verbindungsgliedern (3, 4, 4a) wie Wandgelenk (3), Winkel (4), Aufsatzflansch (4a) und ähnlichen, dadurch gekennzeichnet, daß im Tragarmprofil des jeweiligen Tragarmes (1, 16) eine die gesamte Länge des Tragarmes (1, 16) durchsetzende Spannstrebe (23) geführt ist, deren Enden (22) mit Befestigungsmitteln, wie Gewinde (25, 26) Schrauben, Muttern, Hutmuttern (27), Klemmverbindungen mit dem Bewegungs- und Verbindungsgliedern (3, 4, 4a) so verbunden sind, daß eine Zugspannung in der Spannstrebe (23) und eine Druckspannung an den Stirnseiten (35, 35a) zwischen Tragarm (1, 16) und den Bewegungs- und Verbindungsgliedern (3, 4, 4a) entsteht.

2. Aufhängevorrichtung nach Anspruch 1, dadurch gekennzeichnet, daß die Spannstrebe (23) außerhalb der Mitte (31) des Querschnitts des Tragarms (1, 16) angeordnet ist.

3. Aufhängevorrichtung nach Anspruch 1, dadurch gekennzeichnet, daß in den Bewegungs- und Verbindungsgliedern (3, 4, 4a), Nuten (29) oder Bohrungen zur Aufnahme der Spannstrebe (23) angeordnet ist.

4. Aufhängevorrichtung nach Anspruch 1, dadurch gekennzeichnet, daß in den Bewegungs- und Verbindungsgliedern (3, 4, 4a) Gewindelöcher (30) zum Einschrauben der Spannstrebe (23) angeordnet sind.

5. Aufhängevorrichtung nach Anspruch 1, dadurch gekennzeichnet, daß die Spannstrebe (23) in Abständen mit Klemmelementen (48) im Tragarmprofil gegen Vibration gesichert ist, wobei zwischen Spannstrebe (23), Innenwand (49) des Tragarmprofiles und Klemmelement (48) ein Kraft- oder Formschluß vorhanden ist.

6. Aufhängevorrichtung nach Anspruch 1, dadurch gekennzeichnet, daß im Querschnitt des Tragarms (1, 16) eine Auswölbung (39) zur Aufnahme und Führung des Spannstrebe (23) angeordnet ist.

7. Aufhängevorrichtung nach Anspruch 1, dadurch gekennzeichnet, daß an der Stirnseite (35a) der Bewegungs- und Verbindungsglieder (3, 4, 4a) eine Nut (19) für die Aufnahme einer Dichtung (20) und eine Schulter (21a) mit Stutzen (18) angeordnet sind, wobei die Schulter (21a) bündig mit dem Profil des Tragarms (1, 16) gestaltet ist.

8. Aufhängevorrichtung nach Anspruch 7, dadurch gekennzeichnet, daß an den Bewegungs- und Verbindungsgliedern (3, 4, 4a) eine bis zur Schulter (21a) verlaufende Schräge (46) angeordnet ist.

9. Aufhängevorrichtung nach Anspruch 1, dadurch gekennzeichnet, daß in den Bewegungs- und Verbindungsgliedern (3, 4, 4a) eine Kührungsbuchse (40) mit Bund (42) angeordnet ist, wobei die Führungsbuchse (40) mit einem Gewindeloch (30) oder einer Nut (29) zur Aufnahme der Spannstrebe (23) versehen ist, wobei zwischen Dichtung (20), Bund (42), Bewegungs- und Verbindungsglied (3, 4, 4a) und Tragarm (1, 16) beim Aufbringen der erforderlichen Zugspannung in der Spannstrebe (23) ein Kraftschluß entsteht.

10. Aufhängevorrichtung nach einem der Ansprüche 3 bis 9, dadurch gekennzeichnet, daß am Ende der Nut (29) eine die Hutmutter (27) umschließende Erhebung (45) angeordnet ist.
